# EUROPEAN PATENT APPLICATION

(11) **EP 1 555 847 A2**
(43) Date of publication of application: **20.07.2005**
(21) Application number: 05000724.4
(22) Date of filing: 14.01.2005
(51) Int. Cl.: H04Q 7/38

(54) **Apparatus and method for identifying a neighboring cell boundary in a mobile communication system**

(30) Priority: 14.01.2004 KR 2004002765
(71) Applicant: Samsung Electronics Co., Ltd., Suwon-si, Gyeonggi-do (KR)
(72) Inventor: Cho, Ki-Ho, Yeongtong-gu, Suwon-si, Gyeonggi-do (KR)
(74) Representative: Lang, Johannes, Dipl.-Ing.

(57) **Abstract**

A mobile terminal (250) identifies a cell boundary (230) of a mobile communication network supporting an asynchronous scheme for handover between different communication systems (210,220). For this, a boundary indication base station (240) newly defines boundary indication codewords distinguished from existing codewords used for acquisition of frame synchronization, and transmits one of the boundary indication codewords over a secondary synchronization channel every frame. Upon receiving the boundary indication codeword over the secondary synchronization channel, the mobile terminal recognizes that it is located in a boundary of the mobile communication network supporting the asynchronous scheme, and performs handover to a mobile communication network supporting a synchronization scheme.

## Description

### BACKGROUND OF THE INVENTION

### Field of the Invention

The present invention relates generally to a handover apparatus and method in a mobile communication system. In particular, the present invention relates to an apparatus and method for identifying a cell boundary for handover between different mobile communication systems.

### Description of the Related Art

A 2^{nd} generation mobile communication scheme providing a voice-oriented service typically includes a Global System for Mobile communication (GSM) and Interim Standard-95 (IS-95). The GSM, which has been commercialized in Europe since 1992, provides a service using a Time Division Multiple Access (TDMA) scheme, while the IS-95, which has been commercialized in South Korea and the US, uses a Code Division Multiple Access (CDMA) scheme to provide wireless service.

A 3^{rd} generation mobile communication scheme, which has evolved from the 2^{nd} generation mobile communication scheme, refers to a mobile communication scheme supporting not only a voice service but also a packet - service, and uses the CDMA scheme. The 3^{rd} generation mobile communication scheme is classified into 3^{rd} Generation Partnership Project/Wideband CDMA (3GPP/WCDMA), which is a European/Japanese asynchronous standard, and 3^{rd} Generation Partnership Project-2/CDMA2000 (3GPP2/CDMA2000), which is an American synchronous standard.

A service by the 3^{rd} generation mobile communication scheme, if commercialized in the future, will coexist with a service by the 2^{nd} generation mobile communication scheme. That is, in an early commercialization process of the 3^{rd} generation mobile communication system, 3^{rd} generation mobile communication networks will be installed in selected major cities, not all over the nation, due to the expected economic burden. In this heterogeneous network environment, a mobile terminal supporting the 3^{rd} generation mobile communication scheme cannot receive a service if it leaves the 3^{rd} generation mobile communication network. Because the 2^{nd} generation mobile communication system and the 3^{rd} generation mobile communication system use different frequencies or communication schemes, a technique for providing compatibility therebetween is required. In particular, of significant importance is a handover or handoff between systems using different frequencies and communication schemes. For example, systems using different communication schemes (e.g., Frequency Division Duplexing (FDD), Wide Band-Time Division Duplexing (WB-TDD), Narrow Band-Time Division Duplexing (NB-TDD), GSM, CDMA200, etc.) or systems using the same communication scheme but using different frequencies may be installed in the vicinity of each other. In this situation, if a mobile terminal moves from a base station from which it receives a current service by a certain communication scheme and a certain frequency, to a new base station that uses a different communication scheme or a different frequency, handover between the base stations is needed for global roaming.

### SUMMARY OF THE INVENTION

The present invention is, therefore, to provide an apparatus and method for identifying a cell boundary in a mobile communication system.

The present invention is to provide an apparatus and method for identifying a boundary of a cell where a mobile terminal supports a communication scheme different from that of the cell in a heterogeneous mobile communication network in which cells supporting different communication schemes are mixed.

The present invention is to provide an apparatus and method for identifying a boundary of a cell where a mobile terminal uses a frequency different from that of the cell in a heterogeneous mobile communication network in which cells using different frequencies are mixed.

The present invention is to provide an apparatus and method for identifying a boundary of a 3^{rd} generation mobile communication network by a mobile terminal located in a 2^{nd} generation mobile communication network.

The present invention is to provide an apparatus and method for identifying a boundary of a 3^{rd} generation mobile communication network by a mobile terminal through a channel used for synchronization between a mobile terminal and a base station in the 3^{rd} generation mobile communication network.

The present invention is to provide an apparatus and method for transmitting specific codes for distinguishing a cell boundary through a secondary synchronization channel used for frame synchronization in an asynchronous mobile communication network.

The present invention is to provide an apparatus and method for newly defining, by a mobile terminal, specific codes different from the existing codes to distinguish cell boundaries, and identifying a cell boundary using the newly defined codes in an asynchronous mobile communication network.

In accordance with a first aspect of the present invention, there is provided a method for identifying a boundary of a mobile communication network supporting an asynchronous scheme by a boundary indication codeword by a mobile terminal in a mobile communication system supporting the asynchronous scheme, which designates codewords used for acquisition of frame synchronization and boundary indication codewords distinguished from the codewords, and transmits one of the codewords and the boundary indication codewords over a secondary synchronization channel. The method comprises the steps of receiving a primary synchronization channel, acquiring slot synchronization from the primary synchronization channel, and then receiving the secondary synchronization channel; determining whether any one of the boundary indication codewords is received over the secondary synchronization channel; and performing handover to a mobile communication network supporting a different communication scheme or a different frequency from the asynchronous scheme, if it is determined that a boundary indication codeword is received over the secondary synchronization channel.

In accordance with a second aspect of the present invention, there is provided a method for indicating a boundary of a mobile communication network supporting an asynchronous scheme by a boundary indication base station in a mobile communication system supporting the asynchronous scheme. The method comprises the steps of transmitting, by a mobile terminal, a primary synchronization channel required for acquisition of slot synchronization; and designating boundary indication codewords distinguished from codewords used for acquisition of frame synchronization, and transmitting one of the boundary indication codewords over a secondary synchronization channel every frame.

In accordance with a third aspect of the present invention, there is provided a method for indicating a boundary of a mobile communication network supporting an asynchronous scheme by a boundary indication base station in a mobile communication system supporting the asynchronous scheme. The method comprises the steps of designating, by the boundary indication base station, a primary synchronization channel for acquisition of slot synchronization and boundary indication codewords distinguished from codewords used for acquisition of frame synchronization, and transmitting a secondary synchronization channel to which any one of the boundary indication codewords is mapped, at a predetermined position of each of slots comprising a frame; and receiving, by a mobile terminal, a primary synchronization channel, acquiring slot synchronization from the primary synchronization channel, and performing handover to a mobile communication network supporting a different communication scheme or a different frequency from the asynchronous scheme if any one of the boundary indication codewords is received over the secondary synchronization channel.

In accordance with a fourth aspect of the present invention, there is provided an apparatus for indicating a boundary of a mobile communication network supporting an asynchronous scheme by a boundary indication base station in a mobile communication system supporting the asynchronous scheme. The apparatus comprises the boundary indication base station for designating a primary synchronization channel for acquisition of slot synchronization and boundary indication codewords distinguished from codewords used for acquisition of frame synchronization, and transmitting a secondary synchronization channel to which any one of the boundary indication codewords is mapped, at a predetermined position of each of slots comprising a frame; and a mobile terminal for receiving a primary synchronization channel, acquiring slot synchronization from the primary synchronization channel, and performing handover to a mobile communication network supporting a different communication scheme or a different frequency from the asynchronous scheme if any one of the boundary indication codewords is received over the secondary synchronization channel.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating an example of a Multi-Band Multi-Mode (MBMM) terminal accessible to different mobile communication systems;
FIG. 2 is a diagram illustrating an example of a method for indicating a boundary of a neighboring cell in a mobile communication system;
FIG. 3 is a diagram illustrating a format of a synchronization channel in an asynchronous mobile communication system according to an embodiment of the present invention;
FIG. 4 is a block diagram illustrating a structure of a boundary indication base station in a mobile communication system according to an embodiment of the present invention; and
FIG. 5 is a flowchart illustrating an operation performed by a mobile terminal according to an embodiment of the present invention.

### DETAILED DESCRIPTION OF THE PREFERRED EMBODIMENT

An embodiment of the present invention will now be described in detail with reference to the accompanying drawings. In the following description, a detailed description of known functions and configurations incorporated herein has been omitted for conciseness.

Generally, in a mobile communication system, a cell serves as only a physical layer of its base station (also known as "Node B"). Therefore, in the following description, it will be assumed that the base station and the cell have the same meaning and one base station corresponds to one cell.

Handover between base stations can typically be classified into inter-frequency handover and inter-Radio Access Technology (RAT) handover. Inter-RAT handover refers to handover between mobile communication systems using different communication schemes. For inter-RAT handover, a mobile terminal (also known as "user equipment (UE)") is required to monitor a state of a base station (hereinafter referred to as "target base station") of a mobile communication system, to which the mobile terminal is to be handed over. An operation of monitoring a state of the target base station is called "inter-RAT measurement." Inter-frequency handover refers to handover between different frequencies in a mobile communication system. That is, inter-frequency handover refers to handover between base stations using different frequencies, although they use the same communication scheme. For inter-frequency handover, a mobile terminal should be able to monitor a state of a target base station, and an operation of monitoring a state of the target base station is called "inter-frequency measurement."

In order to support the foregoing handover, the following conditions should be satisfied.

First, a mobile terminal capable of providing access to different mobile communication systems is required. Such a mobile terminal is called a "Multi-Band Multi-Mode (MBMM) terminal." Herein, the phrase "different mobile communication systems" refers to mobile communication systems using different communication schemes, or mobile communication systems using different frequencies.

Second, an MBMM terminal should be able to identify a communication scheme or a frequency supported in a cell where it is currently located, in order to receive a desired service through its current cell. For example, the MBMM terminal accesses a cell supporting a WCDMA scheme (hereinafter referred to as "WCDMA cell") in a service area where the WCDMA scheme and a CDMA scheme coexist or a service area where only the WCDMA scheme exists, while the MBMM terminal accesses a cell supporting the CDMA scheme (hereinafter referred to as "CDMA cell") in a service area where only the CDMA scheme exists.

Third, an MBMM terminal should be able to identify a boundary of a cell using a particular communication scheme or a particular frequency, in order to receive a stable service in performing handover. For example, if an MBMM terminal currently receiving a service by the CDMA scheme (hereinafter referred to as "CDMA service") arrives at a boundary of a WCDMA cell (hereinafter referred to as "WCDMA boundary"), the MBMM terminal should identify its arrival at the WCDMA boundary and perform handover-to-WCDMA cell. However, if an MBMM terminal currently receiving a service by the WCDMA scheme (hereinafter referred to as "WCDMA service") identifies its arrival at the WCDMA boundary, the MBMM terminal should perform handover-to-CDMA cell in order to receive stable service.

Fourth, in a mobile communication network, an MBMM terminal should be able to rapidly transmit a paging message and connect a call regardless of the communication scheme and frequency supported by a mobile communication system to which it belongs.

Some of the foregoing conditions will be described later in detail. In the following description, it will be assumed that a mobile communication network supporting the WCDMA scheme (hereinafter referred to as "WCDMA network") is mixed with a mobile communication network supporting the CDMA scheme (hereinafter referred to as "CDMA network"). That is, the description will refer to a handover between a CDMA cell and a WCDMA cell. Alternatively, the present invention can also be applied to handover between any cells supporting different communication schemes.

A detailed description will now be provided of the first condition.

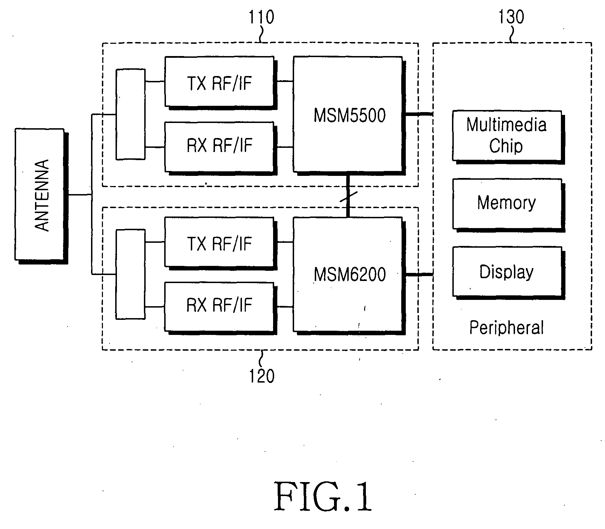

FIG. 1 is a block diagram illustrating an example of an MBMM terminal satisfying the first condition. Specifically, FIG. 1 illustrates a structure of an MBMM terminal supporting both the WCDMA scheme and the CDMA scheme. In FIG. 1, the MBMM terminal includes a common peripheral block 130 having elements necessary for supporting both the WCDMA scheme and the CDMA scheme, a CDMA access module 110 having elements necessary for supporting the CDMA scheme, and a WCDMA access module 120 having elements necessary for supporting the WCDMA scheme. The CDMA access module 110 performs an operation of transmitting/receiving signals by the CDMA scheme when the MBMM terminal is located in a CDMA-only service area. The WCDMA access module 120 performs an operation of transmitting/receiving signals by the WCDMA scheme when the MBMM terminal is located in a WCDMA-only service area or a CDMA/WCDMA service area where both the CDMA scheme and the WCDMA scheme are available. Therefore, the MBMM terminal unconditionally uses the WCDMA access module 120 when it enters an area where the WCDMA service is available. However, the MBMM terminal uses the CDMA access module 110 when it enters the CDMA-only service area. An operation of selecting the CDMA access module 110 and the WCDMA access module 120 by the MBMM terminal will be described later in detail.

A detailed description will now be made of the second condition.

Commonly, a WCDMA mobile communication system provides two different methods of allowing a mobile terminal to identify a boundary: a first method using a dummy pilot signal and a second method using a base station located in the boundary.

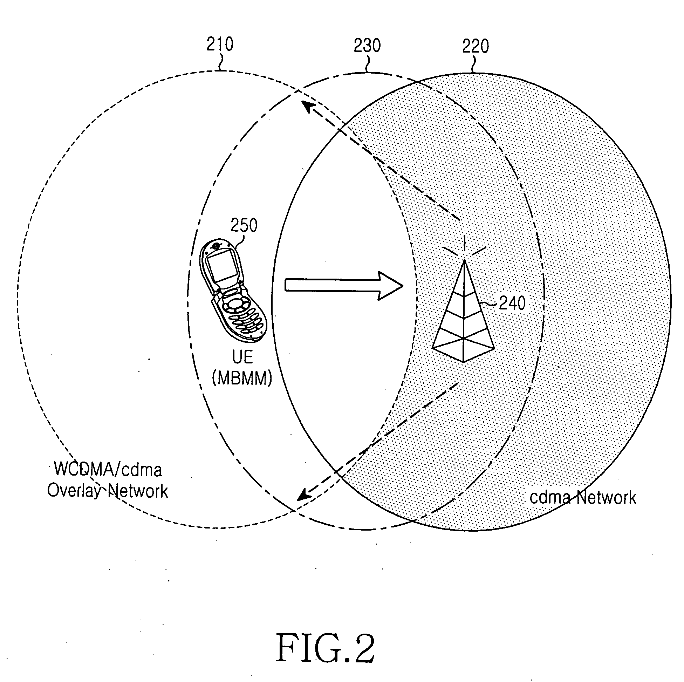

FIG. 2 is a diagram illustrating the first method of indicating a boundary of a WCDMA mobile communication system using a dummy pilot signal. It is assumed in FIG. 2 that a mobile terminal 250 is receiving a desired WCDMA service in a WCDMA/CDMA service area 210. In order to indicate a boundary using a dummy pilot signal, a dummy pilot base station 240 does not have resources for actual call connection. Simply, the dummy pilot base station 240 transmits a common pilot channel (CPICH) signal for informing the mobile terminal 250 of a WCDMA boundary. Usually, in the WCDMA mobile communication system, the CPICH of a cell can be identified using 512 scrambling codes, some of which are allocated for the CPICH of the dummy pilot base station 240. Also, the mobile terminal 250 is pre-informed that the corresponding scrambling codes indicate the dummy pilot base station 240. Therefore, the mobile terminal 250, which is previously informed that scrambling codes used for the CPICH are dummy pilot scrambling codes, can recognize that it is currently located in a boundary 230 of the WCDMA mobile communication system. Upon detecting the dummy pilot scrambling code, the mobile terminal 250 is handed over to a CDMA network 220 in order to receive a stable service. The first method is advantageous in that it can definitely indicate the boundary 230 of the WCDMA mobile communication system. However, the first method is disadvantageous in that it requires the dummy pilot base station 240 that transmits a dummy pilot. Although the dummy pilot base station is not separately installed, a function of transmitting the dummy pilot signal should be added to the existing base station.

The second method allows a base station located in a boundary of the WCDMA mobile communication system to inform a mobile terminal that it is a boundary base station. It is assumed herein that the mobile terminal is currently receiving a WCDMA service. The mobile terminal monitors whether a reception level of a pilot signal received from a corresponding base station is decreased below a predetermined threshold. If a reception level of the pilot signal is decreased below the threshold, the mobile terminal is handed over to a CDMA network. The second method is advantageous in that the mobile terminal can be handed over to the CDMA network without using a separate dummy pilot base station. However, the second method is disadvantageous in that the use of a reception level of the pilot signal in a radio environment undergoing abrupt change in interference may cause a ping-pong phenomenon indicating that a mobile terminal is repeatedly handed over between the WCDMA network and the CDMA network.

As described above, the dummy pilot serves to inform a mobile terminal that it has arrived at a boundary of a corresponding frequency allocation (FA) in a mobile communication network. Therefore, upon receiving the dummy pilot, the mobile terminal performs handover to another FA in the same system, or handover from a WCDMA mobile communication system to a CDMA mobile communication system.

A dummy pilot in the existing CDMA mobile communication system simply transmits a pilot channel. However, in the WCDMA mobile communication system, a synchronization channel (SCH) is separately used in addition to the CPICH which is a pilot channel due to an asynchronous characteristic of the WCDMA mobile communication system. The SCH includes a primary synchronization channel (P-SCH) and a secondary synchronization channel (S-SCH).

A description will now be made of a procedure for acquiring a CPICH from a particular cell in a WCDMA mobile communication system.

To acquire the CPICH, a multi-step cell search algorithm is used. In order to realize the multi-step cell search algorithm, 512 scrambling codes are divided into 64 code groups, each of which is allocated 8 scrambling codes. In order to facilitate cell search, P-SCH, S-SCH and CPICH are used. The P-SCH, S-SCH and CPICH are signals transmitted from a base station to a mobile node over a forward link.

The multi-step cell search algorithm includes a first cell search step of searching for a slot time of a slot received with maximum power using a P-SCH, a second cell search step of detecting frame synchronization and a base station group designation code for a base station to which a mobile terminal belongs, through an S-SCH, after acquiring slot synchronization in the first cell search step, and a third cell search step of finally searching for a base station to which the mobile terminal belongs by detecting a scrambling code for the base station using a CPICH based on the frame synchronization and the base station group designation code searched in the second cell search step.

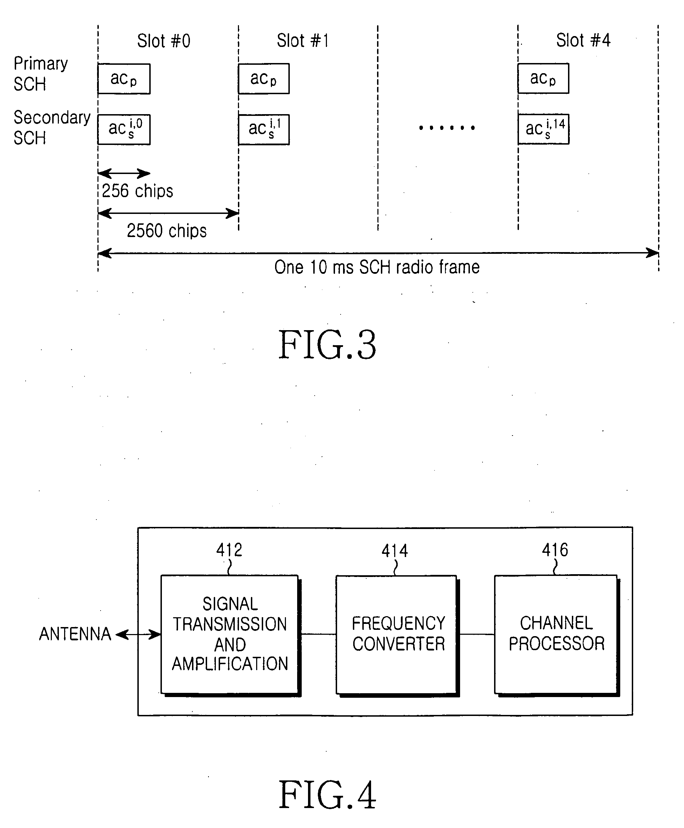

FIG. 3 is a diagram illustrating a frame format used for a forward channel, over which a P-SCH and an S-SCH are transmitted. Referring to FIG. 3, one frame has a 10-ms length of 38400 chips, and comprises 15 time slots Slot#0 - Slot#14. Each of the time slots has a 0.67-ms length of 2560 chips. For a leading 256-chip interval of each time slot, a P-SCH and an S-SCH are transmitted. Because the two channels are orthogonal with each other, they overlap each other during their transmission. A CPICH uses different scrambling codes for respective base stations, and a period of the scrambling code is equal to a length of one frame. In a WCDMA mobile communication system having the foregoing channel structure, as many codes as only a one-frame length in a Gold code with a 2¹⁸-1 period is used for the different scrambling codes, and only M (=512) Gold codes among all available Gold codes are used.

A primary synchronization code acₚ used for the P-SCH is commonly used by all cells, and is repeated every slot for a 256-chip interval which is 1/10 of 1 slot. The P-SCH is used by a mobile terminal in searching for slot timing of a received signal. That is, the mobile terminal can acquire slot synchronization by receiving the P-SCH and detecting a start point of each slot by the primary synchronization code acₚ. (First Cell Search Step)

The S-SCH is mapped to secondary synchronization codes, i.e., base station group designation codes acₛ^{i,0}~ acₛ^{i,14}, for a base station before being transmitted. After acquiring slot synchronization by the P-SCH, the mobile terminal detects a base station group designation code and frame synchronization through the S-SCH. Here, the base station group designation code is information used for determining a cell group to which a base station belongs, and a comma-free code is used as the base station group designation code. The comma-free code comprises 64 codewords. One codeword comprises 15 symbols, and the 15 symbols are repeatedly transmitted every frame. However, values of the 15 symbols are not transmitted as they are, but mapped to one of the secondary synchronization codes acₛ^{i,0} ~ acₛ ^{i,14} before being transmitted, as described above. That is, as illustrated in FIG. 3, an i^{th} secondary synchronization code corresponding to a symbol value 'i' is transmitted every slot. The 64 codewords of the comma-free code are used for identifying 64 code groups. The comma-free code is characterized in that cyclic shift of the codewords is unique. Therefore, information on code groups and frame synchronization can be obtained by correlating secondary synchronization codes to the S-SCH for a several-slot interval and checking the correlation results for 64 codewords and their 15-cyclic shift. Here, the "frame synchronization" refers to synchronization for timing or phase within one period of a scrambling/spreading code in a spread spectrum system. In the current WCDMA mobile communication system, because one period of a spreading code and a length of a frame are both 10 ms, this will be referred to as "frame synchronization." The mobile terminal can determine a start point of a frame by acquiring the frame synchronization. (Second Cell Search Step)

By performing the first cell search step and the second cell search step, the mobile terminal can acquire information on slot synchronization, base station group designation code, and frame synchronization through the P-SCH and S-SCH. However, because the mobile terminal cannot determine which of 8 scrambling codes in a code group indicated by the acquired base station group designation code is a scrambling code of its base station, code synchronization is not completely performed yet. Therefore, the mobile terminal can identify which of 8 scrambling codes is a scrambling code to be used by the mobile terminal itself, by calculating a correlation between a CPICH signal and the 8 scrambling codes included in the code group. In this manner, the mobile terminal acquires a CPICH of the corresponding base station. (Third Cell Search Step)

As described above, in the WCDMA mobile communication system, a plurality of channels are required in acquiring a CPICH which is a pilot signal. In particular, transmitting a plurality of channels to indicate a boundary by a dummy pilot base station causes an increase in interference, an increase in required transmission power, and an increase in number of required channel elements. In addition, using the existing scrambling code for a particular purpose unspecified in a standard enables global roaming.

In the embodiment of the present invention, the WCDMA network uses only a P-SCH signal and an S-SCH signal without transmitting a CPICH, when transmitting a dummy pilot signal. In this manner, it is possible to simply transmit the dummy pilot signal with reduced resources. A mobile terminal identifies a dummy pilot base station through the S-SCH signal, and detects its arrival at a boundary of the WCDMA mobile communication system.

As described above, the mobile terminal should first acquire a P-SCH and an S-SCH in order to acquire a CPICH. In the embodiment of the present invention, codewords for indicating a WCDMA boundary, rather than the existing 64 codewords transmitted over the S-SCH, are transmitted over the S-SCH. To this end, in the embodiment of the present invention, 7 codewords for indicating a WCDMA boundary (hereinafter, referred to as "boundary indication codeword") are newly defined, separately from the existing 64 codewords. The newly defined 7 boundary indication codewords are illustrated in Table 1.

**Table 1**

| Codeword No. | Codeword |
|---|---|
| 65 | 9, 13, 1, 3, 11, 5 10, 14, 12, 8, 4, 15, 2, 1, 6 |
| 66 | 10, 13, 4, 8, 14, 7, 1, 11, 9, 12, 6, 15, 3, 2, 7 |
| 67 | 10, 14, 3, 7, 13, 11, 2, 8, 4, 9, 6, 12, 5, 1, 10 |
| 68 | 10, 15, 4, 7, 14, 13, 2, 8, 3, 9, 6, 11, 1, 4, 5 |
| 69 | 11, 14, 3, 6, 12, 4, 9, 13, 10, 7, 1, 8, 5, 2, 9 |
| 70 | 13, 15, 5, 7, 14, 12, 1, 11, 6, 10, 3, 9, 2, 4, 6 |
| 71 | 14, 15, 6, 12, 3, 11, 2, 5, 7, 13, 9, 1, 8, 4, 12 |

The 7 boundary indication codewords newly defined in Table 1 are transmitted from a base station located in a WCDMA boundary (hereinafter referred to as "boundary indication base station") over an S-SCH. The codewords transmitted over the S-SCH are characterized in that they are not identical to each other even though they undergo any one of 1-cyclic shift to 15-cyclic shift. Actually, 64 sequences can be identified with only a minimum of 3 consecutive numbers. The 7 boundary indication codewords defined in Table 1 also have the foregoing characteristic, like the existing 64 codewords.

With reference to the accompanying drawings, a detailed description will now be made of an operation according to an embodiment of the present invention.

In the embodiment of the present invention, a boundary indication base station transmits one of the 7 boundary indication codewords defined in Table 1 over an S-SCH. An MBMM terminal determines whether a codeword transmitted over the S-SCH is one of the boundary indication codewords defined in Table 1. If the codeword transmitted over the S-SCH is a boundary indication codeword, the MBMM terminal recognizes that it is located in a WCDMA boundary. Thereafter, the MBMM terminal performs a procedure for handover-to-CDMA network. Here, it is assumed that the MBMM terminal is currently receiving a WCDMA service.

FIG. 4 is a block diagram illustrating a structure of a boundary indication base station according to an embodiment of the present invention. As illustrated in FIG. 4, the boundary indication base station is identical to a normal base station in terms of a channel generation and transmission process, and separately has a module for transmitting a P-SCH and an S-SCH.

Referring to FIG. 4, a channel processor 416 generates a P-SCH signal and an S-SCH signal for indicating a WCDMA boundary. The S-SCH signal has one of boundary indication codewords defined to indicate a WCDMA boundary. That is, the channel processor 416 selects one of the 7 boundary indication codewords defined in Table 1. 15 symbols comprising the selected boundary indication codeword are mapped to secondary synchronization codes acₛ^{i,j} (65≤ j ≤ 71) for the S-SCH, and then transmitted every frame. A frequency converter 414 converts the P-SCH signal and the S-SCH signal received from the channel processor 416, into radio frequency (RF) signals. A signal transmission and amplification unit 412 amplifies the RF-converted P-SCH signal and S-SCH signal, and transmits the amplified P-SCH signal and S-SCH signal via an antenna.

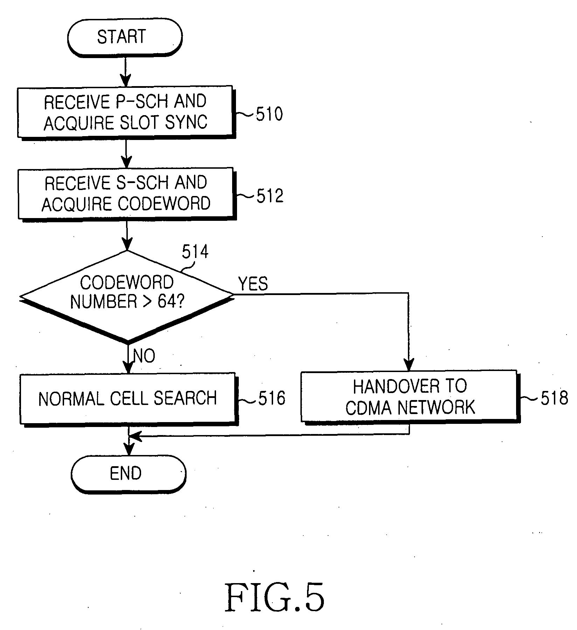

FIG. 5 is a flowchart illustrating an operation performed by an MBMM terminal according to an embodiment of the present invention. Specifically, FIG. 5 illustrates an operation of identifying a WCDMA boundary through an S-SCH by an MBMM terminal.

Referring to FIG. 5, an MBMM terminal starts a cell search function when it is powered on or it requires handover to another cell due to its movement. When the cell search function is started, the MBMM terminal proceeds to step 510 where it receives a P-SCH for acquisition of slot synchronization. The MBMM terminal acquires slot synchronization by searching for a start point of a slot by the P-SCH. Thereafter, the MBMM terminal proceeds to step 512 where it receives an S-SCH and reads an integer between 1 and 15 which is transmitted every slot. After acquiring 3 integers from 3 consecutive slots through the S-SCH, the MBMM terminal compares the acquired integers with the existing 64 codewords to determine whether there is any identical codeword. If it is determined that there is an identical codeword, it indicates that a base station that transmitted the S-SCH is not a boundary indication base station indicating a WCDMA boundary. In this case, the determined identical codeword will have a codeword number smaller than or equal to 64 (step 514). Therefore, the MBMM terminal proceeds to step 516 where it performs a normal cell search operation for acquisition of a CPICH.

However, if it is determined that there is no codeword which is identical to the acquired 3 integers among the exiting 64 codewords, the MBMM terminal can consider that a codeword transmitted over the S-SCH is a boundary indication codeword for indicating a WCDMA boundary. For more accurate determination, the MBMM terminal may perform an operation of comparing the acquired 3 integers with the 7 boundary indication codewords defined to indicate the WCDMA boundary. As a result of the comparison, if the acquired 3 integers are identical to any one of the boundary indication codewords, it indicates that a base station that transmitted the S-SCH is a boundary indication base station indicating the WCDMA boundary. In this case, the determined identical codeword will have a codeword number larger than 64 (step 514). Therefore, the MBMM terminal recognizes that it is located in a WCDMA boundary. Thereafter, the MBMM terminal proceeds to step 518 where it performs a procedure for handover-to-CDMA network.

It is assumed in FIG. 5 that the MBMM terminal is belonging to a WCDMA network. Otherwise, if the MBMM terminal receives the boundary indication codeword on the assumption that it is belonging to a CDMA network, the MBMM terminal will perform a procedure for handover-to-WCDMA network.

As can be understood from the foregoing description, a boundary indication base station simply transmits a P-SCH and an S-SCH. A mobile terminal analyzes codewords included in the S-SCH and performs handover-to-CDMA network if a boundary indication codeword is detected.

The present invention has the following advantages.

First, a boundary indication base station requires only the resources used for transmitting a P-SCH and an S-SCH. Therefore, two channel elements per FA are sufficient. That is, although it is general that 10% of maximum power should be allocated for a CPICH, the corresponding power can be saved herein, reducing required transmission power. This contributes to a reduction in power dissipation and a reduction in required capacity of a power amplifier.

Second, a boundary indication base station is not required to transmit a CPICH for indicating a WCDMA boundary, thereby reducing interference possibly caused by the transmission of the CPICH. The reduction in interference contributes to an increase in capacity of neighbor cells.

Third, codewords newly defined to indicate a WCDMA boundary are transmitted over an S-SCH, preventing possible mis-operation of a mobile terminal caused by handover.

Fourth, although the use of the existing dummy pilot requires a time required for applying 8 scrambling codes, the use of an S-SCH, as proposed in the present invention, can reduce the required time, enabling a mobile terminal moving at high speed to correctly identify a cell boundary.

While the invention has been shown and described with reference to a certain embodiment thereof, it should be understood by those skilled in the art that various changes in form and details may be made therein without departing from the spirit and scope of the invention as defined by the appended claims.

## Claims

1. A method for identifying a boundary of a mobile communication network supporting an asynchronous scheme by a boundary indication codeword by a mobile terminal in a mobile communication system supporting the asynchronous scheme, which designates codewords used for acquisition of frame synchronization and boundary indication codewords distinguished from the codewords, and transmits one of the codewords and the boundary indication codewords over a secondary synchronization channel, the method comprising the steps of:
receiving a primary synchronization channel, acquiring slot synchronization from the primary synchronization channel, and then receiving the secondary synchronization channel;
determining whether any one of the boundary indication codewords is received over the secondary synchronization channel; and
performing handover to a mobile communication network supporting a different communication scheme or a different frequency from the asynchronous scheme, if it is determined that a boundary indication codeword is received over the secondary synchronization channel.

2. The method of claim 1, wherein 64 codewords are used for the acquisition of frame synchronization, and the codewords and the boundary indication codewords are not identical to each other even though they undergo any one of from 1-cyclic shift to 15-cyclic shifts.

3. The method of claim 2, wherein the boundary indication codewords are defined in the following table.
| Codeword No. | Codeword |
|---|---|
| 65 | 9, 13, 1, 3, 11, 5 10, 14, 12, 8, 4, 15, 2, 1, 6 |
| 66 | 10, 13, 4, 8, 14, 7, 1, 11, 9, 12, 6, 15, 3, 2, 7 |
| 67 | 10, 14, 3, 7, 13, 11, 2, 8, 4, 9, 6, 12, 5, 1, 10 |
| 68 | 10, 15, 4, 7, 14, 13, 2, 8, 3, 9, 6, 11, 1, 4, 5 |
| 69 | 11, 14, 3, 6, 12, 4, 9, 13, 10, 7, 1, 8, 5, 2, 9 |
| 70 | 13, 15, 5, 7, 14, 12, 1, 11, 6, 10, 3, 9, 2, 4, 6 |
| 71 | 14, 15, 6, 12, 3, 11, 2, 5, 7, 13, 9, 1, 8, 4, 12 |

4. The method of claim 1, further comprising the step of acquiring, frame synchronization by the received codeword if any one of the codewords is received over the secondary synchronization channel.

5. The method of claim 1, further comprising the step of performing handover to a mobile communication network supporting a synchronous scheme if the boundary indication codeword is received.

6. A method for indicating a boundary of a mobile communication network supporting an asynchronous scheme by a boundary indication base station in a mobile communication system supporting the asynchronous scheme, the method comprising the steps of:
transmitting, by a mobile terminal, a primary synchronization channel required for acquisition of slot synchronization; and
designating boundary indication codewords distinguished from codewords used for acquisition of frame synchronization, and transmitting one of the boundary indication codewords over a secondary synchronization channel every frame.

7. The method of claim 6, wherein 64 codewords are used for the acquisition of frame synchronization, and the codewords and the boundary indication codewords are not identical to each other even though they undergo any one of from 1-cyclic shift to 15-cyclic shifts.

8. The method of claim 7, wherein the boundary indication codewords are defined in the following table.
| Codeword No. | Codeword |
|---|---|
| 65 | 9, 13, 1, 3, 11, 5 10, 14, 12, 8, 4, 15, 2, 1, 6 |
| 66 | 10, 13, 4, 8, 14, 7, 1, 11, 9, 12, 6, 15, 3, 2, 7 |
| 67 | 10, 14, 3, 7, 13, 11, 2, 8, 4, 9, 6, 12, 5, 1, 10 |
| 68 | 10, 15, 4, 7, 14, 13, 2, 8, 3, 9, 6, 11, 1, 4, 5 |
| 69 | 11, 14, 3, 6, 12, 4, 9, 13, 10, 7, 1, 8, 5, 2, 9 |
| 70 | 13, 15, 5, 7, 14, 12, 1, 11, 6, 10, 3, 9, 2, 4, 6 |
| 71 | 14, 15, 6, 12, 3, 11, 2, 5, 7, 13, 9, 1, 8, 4, 12 |

9. A method for indicating a boundary of a mobile communication network supporting an asynchronous scheme by a boundary indication base station in a mobile communication system supporting the asynchronous scheme, the method comprising the steps of:
designating, by the boundary indication base station, a primary synchronization channel for acquisition of slot synchronization and boundary indication codewords distinguished from codewords used for acquisition of frame synchronization, and transmitting a secondary synchronization channel to which any one of the boundary indication codewords is mapped, at a predetermined position of each of slots comprising a frame; and
receiving, by a mobile terminal, a primary synchronization channel, acquiring slot synchronization from the primary synchronization channel, and performing handover to a mobile communication network supporting a different communication scheme or a different frequency from the asynchronous scheme if any one of the boundary indication codewords is received over the secondary synchronization channel.

10. The method of claim 9, wherein 64 codewords are used for the acquisition of frame synchronization, and the codewords and the boundary indication codewords are not identical to each other even though they undergo any one of from 1-cyclic shift to 15-cyclic shifts.

11. The method of claim 10, wherein the boundary indication codewords are defined in the following table.
| Codeword No. | Codeword |
|---|---|
| 65 | 9, 13, 1, 3, 11, 5 10, 14, 12, 8, 4, 15, 2, 1, 6 |
| 66 | 10, 13, 4, 8, 14, 7, 1, 11, 9, 12, 6, 15, 3, 2, 7 |
| 67 | 10, 14, 3, 7, 13, 11, 2, 8, 4, 9, 6, 12, 5, 1, 10 |
| 68 | 10, 15, 4, 7, 14, 13, 2, 8, 3, 9, 6, 11, 1, 4, 5 |
| 69 | 11,14,3,6,12,4,9,13,10,7,1,8,5,2,9 |
| 70 | 13,15,5,7,14,12,1,11,6,10,3,9,2,4,6 |
| 71 | 14, 15, 6, 12, 3, 11, 2, 5, 7, 13, 9, 1, 8, 4, 12 |

12. The method of claim 9, further comprising the step of acquiring, frame synchronization by the received codeword by the mobile terminal if any one of the codewords is received over the secondary synchronization channel.

13. The method of claim 9, further comprising the step of performing handover to a mobile communication network supporting a synchronous scheme by the mobile terminal if the boundary indication codeword is received.

14. An apparatus for indicating a boundary of a mobile communication network supporting an asynchronous scheme by a boundary indication base station in a mobile communication system supporting the asynchronous scheme, the apparatus comprising:
the boundary indication base station for designating a primary synchronization channel for acquisition of slot synchronization and boundary indication codewords distinguished from codewords used for acquisition of frame synchronization, and transmitting a secondary synchronization channel to which any one of the boundary indication codewords is mapped, at a predetermined position of each of slots comprising a frame; and
a mobile terminal for receiving a primary synchronization channel, acquiring slot synchronization from the primary synchronization channel, and performing handover to a mobile communication network supporting a different communication scheme or a different frequency from the asynchronous scheme if any one of the boundary indication codewords is received over the secondary synchronization channel.

15. The apparatus of claim 14, wherein 64 codewords are used for the acquisition of frame synchronization, and the codewords and the boundary indication codewords are not identical to each other even though they undergo any one of from 1-cyclic shift to 15-cyclic shifts.

16. The apparatus of claim 15, wherein the boundary indication codewords are defined in the following table.
| Codeword No. | Codeword |
|---|---|
| 65 | 9, 13, 1, 3, 11, 5 10, 14, 12, 8, 4, 15, 2, 1, 6 |
| 66 | 10, 13, 4, 8, 14, 7, 1, 11, 9, 12, 6, 15, 3, 2, 7 |
| 67 | 10, 14, 3, 7, 13, 11, 2, 8, 4, 9, 6, 12, 5, 1, 10 |
| 68 | 10, 15, 4, 7, 14, 13, 2, 8, 3, 9, 6, 11, 1, 4, 5 |
| 69 | 11,14,3,6,12,4,9,13,10,7,1,8,5,2,9 |
| 70 | 13, 15, 5, 7, 14, 12, 1, 11, 6, 10, 3, 9, 2, 4, 6 |
| 71 | 14, 15, 6, 12, 3, 11, 2, 5, 7, 13, 9, 1, 8, 4, 12 |

17. The apparatus of claim 14, wherein if any one of the codewords is received over the secondary synchronization channel, the mobile terminal acquires frame synchronization by the received codeword.

18. The apparatus of claim 14, wherein the mobile terminal performs handover to a mobile communication network supporting a synchronous scheme if the boundary indication codeword is received.
